# EUROPÄISCHE PATENTSCHRIFT

(11) **EP 3 858 656 B1**
(45) Veröffentlichungstag und Bekanntmachung des Hinweises auf die Patenterteilung: **31.07.2024**
(21) Anmeldenummer: 20215857.2
(22) Anmeldetag: 21.12.2020
(51) Int. Cl.: B60L 50/53

(54) **VORLADESCHALTUNG UND STRASSENGEFÜHRTES KRAFTFAHRZEUG**
PRECHARGE CIRCUIT AND ROAD-GUIDED MOTOR VEHICLE
CIRCUIT DE PRÉCHARGE ET VÉHICULE AUTOMOBILE ROUTIER

(30) Priorität: 28.01.2020 DE 102020200990
(43) Veröffentlichungstag der Anmeldung: 04.08.2021
(73) Patentinhaber: VOLKSWAGEN AG, 38440 Wolfsburg (DE)
(72) Erfinder: Weß, Alexander, 38442 Wolfsburg (DE)

(56) Entgegenhaltungen:
- DE-A1- 102016 211 756
- DE-T5- 112012 006 781
- JP-A- 2002 098 725
- JP-A- 2007 202 250
- JP-A- 2012 165 598

## Beschreibung

Die Erfindung betrifft eine Vorladeschaltung für einen Zwischenkreiskondensator eines elektrischen Antriebssystems mit einer Spannungsversorgung aus Oberleitungen, insbesondere für ein straßengeführtes Kraftfahrzeug sowie ein straßengeführtes Kraftfahrzeug.

Es ist bekannt, schienen- oder straßengeführten Kraftfahrzeugen elektrische Energie aus spannungsführenden Oberleitungen zuzuführen. Dabei werden Stromabnehmer (Pantographen) an die Oberleitungen angebügelt oder abgebügelt. Die elektrischen Antriebssysteme weisen typischerweise einen Wechselrichter auf, der dann eine Elektromaschine bestromt, wobei am Eingang des Wechselrichters ein Zwischenkreiskondensator angeordnet ist. Der Zwischenkreiskondensator kann auch aus mehreren Kondensatoren bestehen, die parallel und/oder in Reihe geschaltet sind. Nachfolgend wird jedoch immer nur von einem resultierenden Zwischenkreiskondensator ausgegangen.

Ist der Zwischenkreiskondensator entladen, kommt es beim Anbügeln zu großen Strömen, die mit parasitären Induktivitäten Überspannungen erzeugen können. Daher sind Vorladeschaltungen bekannt, die zu Beginn den Stromfluss begrenzen. Dazu wird beispielsweise ein Widerstand zugeschaltet. Eine solche Vorladeschaltung ist beispielsweise in der EP 2 644 436 A1 als Stand der Technik dargestellt. Ist dann der Zwischenkreiskondensator ausreichend geladen, wird der Widerstand wieder abgeschaltet. Die Steuerung des Vorladewiderstandes erfolgt dabei zentral in einem Steuergerät, das den An- bzw. Abbügelungsvorgang steuert. Kommt es zu einem Abriss vom Stromabnehmer zur Oberleitung, kann dies zu Lichtbögen führen, sodass in solchen Fällen der Stromabnehmer abgebügelt wird.

Der Erfindung liegt das technische Problem zugrunde, eine Vorladeschaltung für einen Zwischenkreiskondensator zu verbessern sowie ein verbessertes straßengeführtes Kraftfahrzeug zu schaffen.

Die Lösung des technischen Problems ergibt sich durch einen Vorladeschaltung mit den Merkmalen des Anspruchs 1 sowie ein straßengeführtes Kraftfahrzeug mit den Merkmalen des Anspruchs 9. Weitere vorteilhafte Ausgestaltungen der Erfindung ergeben sich aus den Unteransprüchen.

Hierzu weist die Vorladeschaltung für einen Zwischenkreiskondensator eines elektrischen Antriebssystems mit einer Spannungsversorgung aus Oberleitungen mindestens einen Widerstand, mindestens zwei Schaltelemente sowie zwei Spannungsmesseinrichtungen auf. Dabei ist die erste Spannungsmesseinrichtung zwischen den Schaltelementen und Stromabnehmern für die Oberleitungen angeordnet und die zweite Spannungsmesseinrichtung parallel zum Zwischenkreiskondensator angeordnet. Durch mindestens ein Schaltelement ist der Widerstand zuschaltbar oder überbrückbar, wobei dem Schaltelement mindestens eine Steuereinheit zugeordnet ist. Das dem Widerstand zugeordnete Schaltelement kann eines der beiden Schaltelemente sein oder aber ein separates Schaltelement, was später noch näher erläutert wird. Dabei ist die Steuereinheit derart ausgebildet, dass automatisch der Widerstand zugeschaltet oder dessen Überbrückung abgeschaltet wird, wenn die Spannung der ersten Spannungsmesseinrichtung unter einem ersten Schwellwert liegt. Die Steuereinheit kann somit aus der zentralen Steuerung für den An- bzw. Abbügelungsvorgang herausgezogen werden und lokal dem Schaltelement zugeordnet werden, sodass der Schaltvorgang beschleunigt wird. Somit kann insbesondere auf kurzzeitige Abrisse der Kontaktierung schneller reagiert werden, bei der die zentrale Steuerung zu langsam ist. Insbesondere bei straßengeführten Kraftfahrzeugen kann es aufgrund von Straßenunebenheiten zu sehr kurzzeitigen Abrissen kommen. Dabei wird während des Abrisses der Zwischenkreiskondensator schnell durch die Elektromaschine entladen. Kommt es dann wieder zum Kontakt mit den Oberleitungen, fließen entsprechend hohe Ströme. Dies wird nun schnell und wirksam unterbunden, da auf ein Absinken der Spannung an der ersten Spannungsmesseinrichtung sofort die Vorladeschaltung aktiviert wird. Entsprechend kann dann die Vorladeschaltung auch wieder automatisch deaktiviert werden, wenn die Aufladung des Zwischenkreiskondensators erfolgt ist. Dabei ist die Steuereinheit als Hardware-Logik ausgebildet, sodass das Steuersignal sehr schnell erzeugt wird. Dabei kann die Hardware-Logik als FPGA oder als Operationsverstärker ausgebildet sein. Vorzugsweise weist die Hardware-Logik eine Hysterese-Funktionalität auf, um ein zu häufiges Ein- und Ausschalten der Vorladeschaltung zu verhindern.

In einer Ausführungsform weist die Vorladeschaltung genau zwei Schaltelemente auf, wobei der mindestens eine Widerstand parallel zu einem Schaltelement angeordnet ist. Diese Schaltung benötigt wenig Bauteile. Allerdings besteht eine dauerhafte galvanische Verbindung zwischen Stromabnehmer und Zwischenkreiskondensator.

In einer alternativen Ausführungsform ist parallel zu dem Widerstand ein drittes Schaltelement angeordnet, mittels dessen der Widerstand überbrückbar ist. Der Vorteil ist, dass so eine galvanische Trennung realisierbar ist.

Die Schaltelemente können dabei als Relais oder als Halbleiterschalter (z.B. IGBT oder MOSFET) ausgebildet sein. Der Vorteil von Relais ist die galvanische Trennung, wobei der Vorteil der Halbleiterschalter die schnellere Schaltzeit ist.

In einer weiteren Ausführungsform sind das erste und zweite Schaltelement als Relais ausgebildet und das dritte Schaltelement als Halbleiterschalter ausgebildet. Somit wird einerseits die galvanische Trennung realisiert, wobei die Zuschaltung des Widerstandes durch den schnellen Halbleiterschalter erfolgt.

In einer weiteren Ausführungsform weist die Steuereinheit zwei Spannungskomparatoren und ein Flip-Flop auf. Der erste Spannungskomparator vergleicht die Spannung der ersten Messeinrichtung mit einer ersten Schwellenspannung und der zweite Spannungskomparator vergleicht die Spannung der zweiten Spannungsmesseinrichtung mit einer zweiten Schwellenspannung. Dabei wird der Ausgang des ersten Spannungskomparators auf einem Reset-Eingang des Flip-Flops gelegt und der Ausgang des zweiten Spannungskomparators auf einen Set-Eingang gelegt. Somit ist sichergestellt, dass, solange die Spannung der ersten Spannungsmesseinrichtung kleiner als die erste Schwellenspannung ist, die Vorladeschaltung aktiv ist. Ist dann die Spannung der ersten Spannungsmesseinrichtung größer als die erste Schwellenspannung die die Spannung der zweiten Spannungsmesseinrichtung größer als die zweite Schwellenspannung, so wird die Vorladeschaltung deaktiviert.

In einer weiteren Ausführungsform weist die Vorladeschaltung mindestens zwei Widerstände auf, wobei dem mindestens zweiten Widerstand ein zusätzliches Schaltelement zugeordnet ist, wobei die Steuereinheit derart ausgebildet ist, in Abhängigkeit der Spannung der zweiten Spannungsmesseinrichtung oder einer Strommesseinrichtung die Widerstände sukzessive abzuschalten oder zu überbrücken. Hierdurch kann der Vorladevorgang beschleunigt werden.

Ein bevorzugtes Anwendungsgebiet ist der Einsatz in einem straßengeführten Kraftfahrzeug.

Die Erfindung wird nachfolgend anhand bevorzugter Ausführungsformen näher erläutert. Die Figuren zeigen:
- Fig. 1: eine schematische Darstellung eines Vorladeprinzips in einer ersten Ausführungsform,
- Fig. 2: eine schematische Darstellung eines Vorladeprinzips in einer zweiten Ausführungsform,
- Fig. 3: eine schematische Darstellung eines Vorladeprinzips in einer dritten Ausführungsform,
- Fig. 4: eine schematische Darstellung einer Vorladeschaltung in einer ersten Ausführungsform und
- Fig. 5: eine schematische Darstellung einer Vorladeschaltung in einer zweiten Ausführungsform.

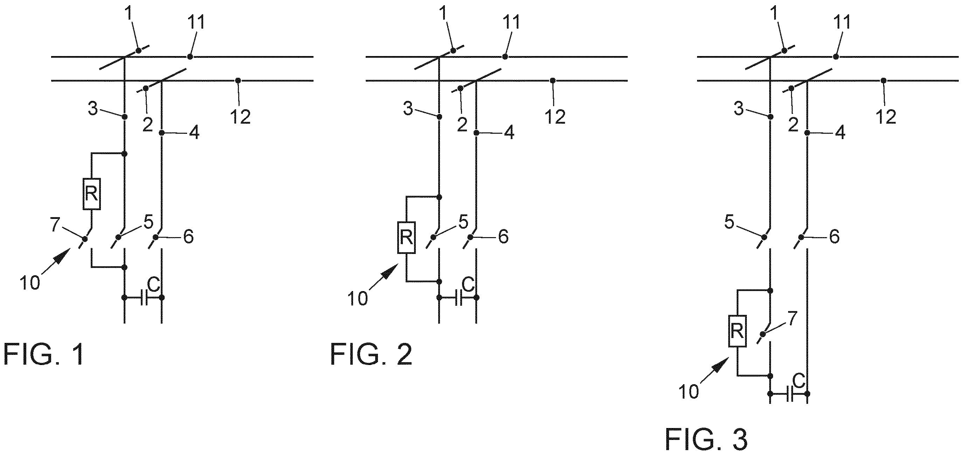

In der Fig. 1 ist ein Vorladeprinzip in einer ersten Ausführungsform dargestellt. Dabei sind eine erste Oberleitung 11 und eine zweite Oberleitung 12 dargestellt, wobei die Oberleitung 11 eine positive Hochvoltspannung und die Oberleitung 12 eine negative Hochvoltspannung führt. Weiter ist ein Zwischenkreiskondensator C dargestellt, der beispielsweise am Eingang eines nicht dargestellten Wechselrichters liegt. Weiter sind Stromabnehmer 1, 2 dargestellt, mittels derer die Oberleitungen 11, 12 mit Spannungsleitungen 3, 4 verbindbar sind. Zwischen den Stromabnehmern 1, 2 und dem Zwischenkreiskondensator C ist jeweils ein Schaltelement 5, 6 angeordnet, die vorzugsweise als Relais ausgebildet sind. Weiter ist eine Reihenschaltung aus einem Widerstand R und einem dritten Schaltelement 7 dargestellt, die parallel zu dem ersten Schaltelement 5 liegen. Das Grundprinzip ist nun wie folgt. Im Ausgangszustand sind alle Schaltelemente offen. Zuerst wird das dritte Schaltelement 7 geschlossen und anschließend das zweite Schaltelement 6 geschlossen. Der Widerstand R wurde also zugeschaltet und reduziert den Ladestrom für den Zwischenkreiskondensator C. Ist dieser ausreichend vorgeladen, wird das Schaltelement 5 geschlossen und das Schaltelement 7 anschließend geöffnet, was aber nicht zwingend ist.

In der Fig. 2 ist ein zweites, alternatives Vorladeprinzip dargestellt, wobei der Widerstand R parallel zum ersten Schaltelement 5 angeordnet wird. Zum Vorladen wird das zweite Schaltelement 6 geschlossen, wobei das erste Schaltelement 5 zunächst offen bleibt. Die Vorladung läuft dann wieder über den Widerstand R. Ist der Vorladevorgang abgeschlossen, wird das erste Schaltelement 5 geschlossen und der Widerstand R überbrückt.

In der Fig. 3 ist schließlich ein drittes Vorladeprinzip dargestellt, wobei die Parallelschaltung aus Widerstand und drittem Schaltelement 7 zwischen dem ersten Schaltelement 5 und dem Zwischenkreiskondensator C angeordnet ist. Zum Vorladen werden dann die beiden Schaltelemente 5, 6 geschlossen (nacheinander oder zusammen), wobei das dritte Schaltelement 7 offen bleibt, sodass die Vorladung über den Widerstand R erfolgt. Ist die Vorladung abgeschlossen, so wird durch Schließen des dritten Schaltelements 7 der Widerstand R überbrückt.

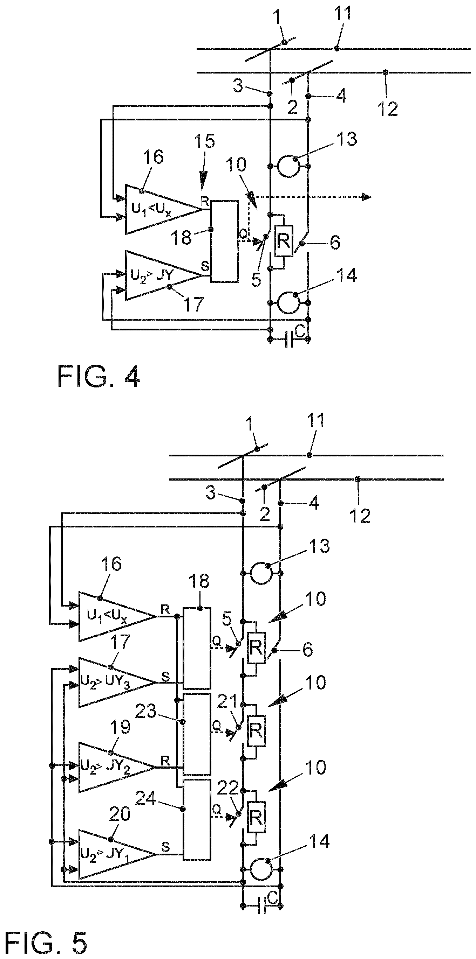

In der Fig. 4 ist nun eine Vorladeschaltung 10 in einer ersten Ausführungsform dargestellt, wobei sich die Vorladeschaltung 10 des Vorladeprinzips gemäß Fig. 2 bedient. Dabei ist eine erste Spannungsmesseinrichtung 13 zwischen den Hochvoltleitungen 3, 4 angeordnet und erfasst eine Spannung U₁ zwischen den Stromabnehmern 1, 2. Eine zweite Spannungsmesseinrichtung 14 ist parallel zum Zwischenkreiskondensator C angeordnet und erfasst die Spannung U₂ am Zwischenkreiskondensator C. Weiter weist die Vorladeschaltung 10 eine Steuereinheit 15 auf, die einen ersten Spannungskomparator 16 und einen zweiten Spannungskomparator 17 sowie ein Flip-Flop 18 aufweist. Der erste Spannungskomparator 16 vergleicht die Spannung U₁ mit einer ersten Schwellenspannung Ux, wobei bei U₁ < Ux eine logische 1 am Ausgang erzeugt wird, wobei der Ausgang des Spannungskomparators 16 mit dem Reset-Eingang des Flip-Flops 18 verbunden ist. Entsprechend vergleicht der zweite Spannungskomparator 17 die Spannung U₂ mit einer zweiten Schwellenspannung U_{Y}, wobei bei U₂ > U_{Y} eine logische 1 am Ausgang anliegt, der mit einem Set-Eingang des Flip-Flops 18 verbunden ist. Dabei sei angemerkt, dass die Eingänge der Spannungskomparatoren 16, 17 vorzugsweise nicht direkt mit den Hochvoltleitungen 3, 4 verbunden sind, sondern ihr Eingangssignal von den Spannungsmesseinrichtungen 13, 14 erhalten. Die Wirkungsweise der Steuereinheit 15 ist nun wie folgt:
Solange die Bedingung U₁ < Ux (R=1) erfüllt ist, liegt am Q-Ausgang des Flip-Flops 18 eine 0 an, sodass das erste Schaltelement 5 offen ist und den Widerstand R nicht überbrückt. Nur wenn U₁ > U_{X} und gleichzeitig U₂ > U_{Y} ist (S=1, R=0), wird das erste Schaltelement 5 geschlossen und überbrückt den Widerstand R.

Hierdurch wird bewirkt, dass, wenn es zu einem Spannungseinbruch aufgrund eines Kontaktabrisses zwischen Stromabnehmer 1, 2 und Oberleitungen 11, 12 kommt, sofort die Vorladeschaltung 10 aktiv geschaltet wird, also die Überbrückung von dem Widerstand R aufgehoben wird. Kommt es dann wieder zum Kontakt, so ist die Vorladeschaltung 10 aktiv und der Widerstand R begrenzt den Ladestrom des Zwischenkreiskondensators C. Der Vorteil ist, dass die Schalteinheit 15 keinerlei Software benötigt und nur die beiden lokalen Spannungen U₁, U₂ benötigt, sodass der Schaltvorgang sehr schnell ist. Der Schaltzustand des ersten Schaltelements 5 kann dabei zusätzlich einer Antriebsstrangsteuerung zugeführt werden.

In der Fig. 5 ist eine zweite Ausführungsform dargestellt, wobei die Vorladeschaltung 10 zwei weitere Widerstände R, zwei weitere Spannungskomparatoren 19, 20, zwei weitere Schaltelemente 21, 22 sowie zwei weitere Flip-Flops 23, 24 aufweist. Das Grundprinzip ist analog Fig. 4, d.h. solange U₁ < Ux ist, sind die Schaltelemente 5, 21, 22 offen und die Widerstände R aktiv. Wird dann der Zwischenkreiskondensator C langsam aufgeladen, so steigt U₂. Bei U₂ > U_{Y3} wird dann das Schaltelement 22 geschlossen und überbrückt den untersten Widerstand R. Steigt dann die Spannung U₂ weiter an, so wird bei U₂ > U_{Y2} das Schaltelement 21 geschlossen und schließlich bei U₂ > U_{Y1} das erste Schaltelement 5 geschlossen, wobei gilt: U_{Y1} > U_{Y2} > U_{Y3}. Bei U_{Y3} > U_{Y2} > U_{Y1} dreht sich entsprechend die Reihenfolge des Schließens der Schaltelemente 5, 21, 22 um.

Die Vorladeschaltungen 10 sind in Fig. 4 und Fig. 5 anhand des Vorladeprinzips gemäß Fig. 2 erläutert, lassen sich aber auch mit Vorladeprinzipien gemäß Fig. 1 oder Fig. 3 umsetzen.

### Bezugszeichenliste

- 1: Stromabnehmer
- 2: Stromabnehmer
- 3: Spannungsleitung
- 4: Spannungsleitung
- 5: Schaltelement
- 6: Schaltelement
- 7: Schaltelement
- 10: Vorladeschaltung
- 11: Oberleitung
- 12: Oberleitung
- 13: Spannungsmesseinrichtung
- 14: Spannungsmesseinrichtung
- 15: Steuereinheit
- 16: Spannungskomparator
- 17: Spannungskomparator
- 18: Flip-Flop
- 19: Spannungskomparator
- 20: Spannungskomparator
- 21: Schaltelement
- 22: Schaltelement
- 23: Flip-Flop
- 24: Flip-Flop
- R: Widerstand
- C: Zwischenkreiskondensator

## Patentansprüche

1. Vorladeschaltung (10) für einen Zwischenkreiskondensator (C) eines elektrischen Antriebssystems mit einer Spannungsversorgung aus Oberleitungen (11, 12), wobei die Vorladeschaltung (10) mindestens einen Widerstand (R), mindestens zwei Schaltelemente (5, 6) sowie zwei Spannungsmesseinrichtungen (13, 14) aufweist, wobei die erste Spannungsmesseinrichtung (13) zwischen den Schaltelementen (5, 6) und Stromabnehmern (1, 2) für die Oberleitungen (11, 12) angeordnet ist und die zweite Spannungsmesseinrichtung (14) parallel zum Zwischenkreiskondensator (C) angeordnet ist, wobei durch mindestens ein Schaltelement (5, 7, 21, 22) der Widerstand (R) zuschaltbar oder überbrückbar ist, wobei dem Schaltelement (5, 7, 21, 22) mindestens eine Steuereinheit (15) zugeordnet ist,
**dadurch gekennzeichnet, dass**
die Steuereinheit (15) lokal dem Schaltelement (5, 7, 21, 22) zugeordnet ist und als Hardware-Logik ohne Software ausgebildet ist, die als Eingangsgrößen nur die beiden Spannungen (U₁, U₂) der zwei Spannungsmesseinrichtungen (13, 14) erhält, wobei die Steuereinheit (15) derart ausgebildet ist, dass automatisch der mindestens eine Widerstand (R) zugeschaltet oder dessen Überbrückung abgeschaltet wird, wenn die Spannung (U₁) der ersten Spannungsmesseinrichtung (13) unter einem ersten Schwellwert (Ux) liegt, wobei automatisch der mindestens eine Widerstand (R) abgeschaltet oder dessen Überbrückung zugeschaltet wird, wenn die Spannung (U₁) der ersten Spannungsmesseinrichtung (13) über dem ersten Schwellwert (Ux) und die Spannung (U₂) der zweiten Spannungsmesseinrichtung (14) über einem zweiten Schwellwert (U_{Y}) liegt.

2. Vorladeschaltung nach Anspruch 1, **dadurch gekennzeichnet, dass** die Vorladeschaltung (10) genau zwei Schaltelemente (5, 6) aufweist, wobei der mindestens eine Widerstand (R) parallel zu einem Schaltelement (5) angeordnet ist.

3. Vorladeschaltung nach Anspruch 1, **dadurch gekennzeichnet, dass** parallel zu dem Widerstand (R) ein drittes Schaltelement (7) angeordnet ist.

4. Vorladeschaltung nach einem der vorangegangenen Ansprüche, **dadurch gekennzeichnet, dass** die Schaltelemente (5, 6, 7, 21, 22) als Relais ausgebildet sind.

5. Vorladeschaltung nach einem der vorangegangenen Ansprüche, **dadurch gekennzeichnet, dass** die Schaltelemente (5, 6, 7, 21, 22) als Halbleiterschaltelemente ausgebildet sind.

6. Vorladeschaltung nach Anspruch 3, **dadurch gekennzeichnet, dass** das erste und zweite Schaltelement (5, 6) als Relais ausgebildet sind und das dritte Schaltelement (7) als Halbleiterschalter ausgebildet ist.

7. Vorladeschaltung nach einem der vorangegangenen Ansprüche, **dadurch gekennzeichnet, dass** die Steuereinheit (15) aus mindestens zwei Spannungskomparatoren (16, 17) und mindestens einem Flip-Flop (18) besteht.

8. Vorladeschaltung nach einem der vorangegangenen Ansprüche, **dadurch gekennzeichnet, dass** die Vorladeschaltung (10) mindestens zwei Widerstände (R) aufweist, wobei dem mindestens zweiten Widerstand (R) ein zusätzliches Schaltelement (21, 22) zugeordnet ist, wobei die Steuereinheit (15) derart ausgebildet ist, in Abhängigkeit der Spannung (U₂) der zweiten Spannungsmesseinrichtung (14) oder einer Strommesseinrichtung die Widerstände (R) sukzessive abzuschalten oder zu überbrücken.

9. Straßengeführtes Kraftfahrzeug, **dadurch gekennzeichnet, dass** das Kraftfahrzeug eine Vorladeschaltung (10) nach einem der Ansprüche 1 bis 8 aufweist.

## Claims

1. Precharge circuit (10) for a DC link capacitor (C) of an electrical drive system having a power supply from overhead lines (11, 12), wherein the precharge circuit (10) has at least one resistor (R), at least two switching elements (5, 6) and two voltage measuring devices (13, 14), wherein the first voltage measuring device (13) is arranged between the switching elements (5, 6) and current collectors (1, 2) for the overhead lines (11, 12), and the second voltage measuring device (14) is arranged in parallel with the DC link capacitor (C), wherein the resistor (R) is able to be switched on or bypassed by way of at least one switching element (5, 7, 21, 22), wherein the switching element (5, 7, 21, 22) is assigned at least one control unit (15),
**characterized in that**
the control unit (15) is locally assigned to the switching element (5, 7, 21, 22) and is in the form of hardware logic without software, which hardware logic receives only the two voltages (U₁, U₂) of the two voltage measuring devices (13, 14) as input variables, wherein the control unit (15) is designed in such a way that the at least one resistor (R) is switched on or the bypass thereof is switched off automatically if the voltage (U₁) of the first voltage measuring device (13) is below a first threshold value (U_{X}), wherein the at least one resistor (R) is switched off or the bypass thereof is switched on automatically if the voltage (U₁) of the first voltage measuring device (13) is above the first threshold value (U_{X}) and the voltage (U₂) of the second voltage measuring device (14) is above a second threshold value (U_{Y}).

2. Precharge circuit according to Claim 1, **characterized in that** the precharge circuit (10) has exactly two switching elements (5, 6), wherein the at least one resistor (R) is arranged in parallel with one switching element (5).

3. Precharge circuit according to Claim 1, **characterized in that** a third switching element (7) is arranged in parallel with the resistor (R).

4. Precharge circuit according to one of the preceding claims, **characterized in that** the switching elements (5, 6, 7, 21, 22) are in the form of relays.

5. Precharge circuit according to one of the preceding claims, **characterized in that** the switching elements (5, 6, 7, 21, 22) are in the form of semiconductor switching elements.

6. Precharge circuit according to Claim 3, **characterized in that** the first and second switching elements (5, 6) are in the form of relays and the third switching element (7) is in the form of a semiconductor switch.

7. Precharge circuit according to one of the preceding claims, **characterized in that** the control unit (15) consists of at least two voltage comparators (16, 17) and at least one flip-flop (18).

8. Precharge circuit according to one of the preceding claims, **characterized in that** the precharge circuit (10) has at least two resistors (R), wherein the at least second resistor (R) is assigned an additional switching element (21, 22), wherein the control unit (15) is designed so as to successively switch off or bypass the resistors (R) on the basis of the voltage (U₂) of the second voltage measuring device (14) or of a current measuring device.

9. Road-guided motor vehicle, **characterized in that** the motor vehicle has a precharge circuit (10) according to one of Claims 1 to 8.

## Revendications

1. Circuit de précharge (10) pour un condensateur de circuit intermédiaire (C) d'un système d'entraînement électrique pourvu d'une alimentation en tension à partir de caténaires (11, 12), dans lequel le circuit de précharge (10) présente au moins une résistance (R), au moins deux éléments de commutation (5, 6), ainsi que deux dispositifs de mesure de tension (13, 14), dans lequel le premier dispositif de mesure de tension (13) est disposé entre les éléments de commutation (5, 6) et des pantographes (1, 2) pour les caténaires (11, 12), et le deuxième dispositif de mesure de tension (14) est disposé en parallèle au condensateur de circuit intermédiaire (C), dans lequel au moins un élément de commutation (5, 7, 21, 22) permet de mettre en circuit ou de ponter la résistance (R), dans lequel au moins une unité de commande (15) est associée à l'élément de commutation (5, 7, 21, 22),
**caractérisé en ce que** l'unité de commande (15) est associée localement à l'élément de commutation (5, 7, 21, 22) et est réalisée sous forme de logique matérielle sans logiciel qui ne reçoit en tant que grandeurs d'entrée que les deux tensions (U₁, U₂) des deux dispositifs de mesure de tension (13, 14), dans lequel l'unité de commande (15) est réalisée de telle sorte que ladite au moins une résistance (R) est automatiquement mise en circuit ou son pontage est désactivé lorsque la tension (U₁) du premier dispositif de mesure de tension (13) est inférieure à une première valeur seuil (U_{X}),
dans lequel ladite au moins une résistance (R) est automatiquement désactivée ou son pontage est mis en circuit lorsque la tension (U₁) du premier dispositif de mesure de tension (13) est supérieure à la première valeur seuil (U_{X}) et la tension (U₂) du deuxième dispositif de mesure de tension (14) est supérieure à une deuxième valeur seuil (U_{Y}).

2. Circuit de précharge selon la revendication 1, **caractérisé en ce que** le circuit de précharge (10) présente exactement deux éléments de commutation (5, 6), dans lequel ladite au moins une résistance (R) est disposée en parallèle à un élément de commutation (5).

3. Circuit de précharge selon la revendication 1, **caractérisé en ce qu'**un troisième élément de commutation (7) est disposé en parallèle à la résistance (R).

4. Circuit de précharge selon l'une quelconque des revendications précédentes, **caractérisé en ce que** les éléments de commutation (5, 6, 7, 21, 22) sont réalisés sous forme de relais.

5. Circuit de précharge selon l'une quelconque des revendications précédentes, **caractérisé en ce que** les éléments de commutation (5, 6, 7, 21, 22) sont réalisés sous forme d'éléments de commutation semi-conducteurs.

6. Circuit de précharge selon la revendication 3, **caractérisé en ce que** le premier et le deuxième élément de commutation (5, 6) sont réalisés sous forme de relais et le troisième élément de commutation (7) est réalisé sous forme de commutateur semi-conducteur.

7. Circuit de précharge selon l'une quelconque des revendications précédentes, **caractérisé en ce que** l'unité de commande (15) est composée d'au moins deux comparateurs de tension (16, 17) et d'au moins une bascule bistable (18).

8. Circuit de précharge selon l'une quelconque des revendications précédentes, **caractérisé en ce que** le circuit de précharge (10) présente au moins deux résistances (R), dans lequel un élément de commutation supplémentaire (21, 22) est associé à ladite au moins deuxième résistance (R), dans lequel l'unité de commande (15) est réalisée de façon à désactiver ou à ponter successivement les résistances (R) en fonction de la tension (U₂) du deuxième dispositif de mesure de tension (14) ou d'un dispositif de mesure de courant.

9. Véhicule automobile routier, **caractérisé en ce que** le véhicule automobile présente un circuit de précharge (10) selon l'une quelconque des revendications 1 à 8.
